# EUROPÄISCHE PATENTSCHRIFT

(11) **EP 2 457 745 B1**
(45) Veröffentlichungstag und Bekanntmachung des Hinweises auf die Patenterteilung: **20.07.2016**
(21) Anmeldenummer: 11181360.6
(22) Anmeldetag: 15.09.2011
(51) Int. Cl.: B60C 11/04, B60C 11/03

(54) **Fahrzeugluftreifen**
Pneumatic tyres for a vehicle
Pneus de véhicule

(30) Priorität: 24.11.2010 DE 102010060778
(43) Veröffentlichungstag der Anmeldung: 30.05.2012
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 1 637 356
- EP-A2- 2 058 143
- WO-A1-2011/016100
- DE-A1- 3 625 120

## Beschreibung

Die Erfindung betrifft einen Fahrzeugluftreifen mit Laufstreifenprofil mit über den Umfang des Fahrzeugluftreifens erstreckten Profilbändern - wie zum Beispiel Profilrippen oder Profilblockreihen -, die in axialer Richtung A des Fahrzeugluftreifens durch über den Umfang des Fahrzeugluftreifens erstreckte Umfangsrillen begrenzt sind, mit wenigstens einer über den Umfang des Fahrzeugluftreifens erstreckten Profilrippe.

Derartige Fahrzeugluftreifen sind bekannt. Dabei werden die die Handlingeigenschaften beeinflussenden Profilbänder möglichst steif ausgebildet. Um möglichst hohe Steifigkeit in Umfangs- und in Querrichtung aufzubringen ist es dabei wünschenswert, diese Profilbänder möglichst mit nur wenigen oder ohne Querrillen auszubilden. Zur Erzielung möglichst hoher Umfangssteifigkeit ist es bekannt hierzu über den Umfang geschlossene Umfangsrippen einzusetzen. Derartige Umfangsrippen können aufgrund ihrer vollständig geschlossenen Ausbildung eine besonders hohe Steifigkeit aufweisen, wodurch auch die für das Handling wichtigen Querkräfte gut übertragen werden können. Aufgrund der fehlenden Rillen sind derartige Profilbänder ohne Querrillen jedoch ohne weitere Maßnahmen nur eingeschränkt geeignet zur Ausbildung guter Aquaplaningeigenschaften. Wasser kann in derartigen Profilbändern weder aufgenommen noch durch Querrillen ausreichend abgeleitet werden.

Darüber hinaus ist es bekannt, zur Erzielung guter Aquaplaningeigenschaften Profilbänder mit vielen, breiten und tiefen Querrillen auszubilden, wodurch beim Abrollen auf der Straße eine großes Volumen an Wasser von den Querrillen aufgenommen und abgeleitet werden kann. Die Ausbildung derartiger Profilbänder führt aufgrund der Vielzahl von durchgehenden Querrillen mit großem Rillenquerschnitt zu einer deutlichen Aufweichung des jeweiligen Profilbandes und somit zu einer Reduzierung der Steifigkeit, wodurch die Handlingeigenschaften auf trockener Straße negativ beeinflusst werden.

Daneben ist es auch bekannt, sehr schmale Profilbänder auszubilden, die eng beieinander in axialer Richtung A des Reifens nebeneinander angeordnet und jeweils durch Umfangrillen voneinander getrennt werden. Bei derartigen Ausbildungen kann durch die Umfangsrillen auf kleiner axialer Fläche relativ viel Wasser aufgenommen und üblicherweise durch zusätzlich in den Profilbändern ausgebildete Querrillen abgeleitet werden. Diese eng beieinander angeordneten Umfangsrillen zwischen den schmalen Profilbändern bewirken zusätzlich eine weitere Reduzierung der Steifigkeit in Querrichtung, die bei sehr enger Dichte derartiger Umfangsrillen zu einer weiteren Reduktion der Eignung für Handling führt.

Die oben genannten Effekte sind insbesondere im Bereich der zur Fahrzeugaußenseite weisenden Reifenschultern, welche für die Handlingeigenschaften besonders wichtig sind, besonders stark ausgeprägt.

Aus **der** EP 16 37 356 A1 sowie aus der DE 36 25 120 A1 **und der** EP 205 81 43 A1 **sind jeweils gattungsgemäße Fahrzeugluftreifen mit Laufstreifenprofilen bekannt, bei welchen in über** den **Umfang des Fahrzeugluftreifens erstreckten Profilrippen zusätzliche Rillen ausgebildet sind, die in den Profilrippen enden.**

Der Erfindung liegt daher die Aufgabe zugrunde, bei derartigen Fahrzeugluftreifen das Laufstreifenprofil mit einfachen Mitteln so zu gestalten, dass ein Profilband sowohl hohe Steifigkeit in Umfangs- und Querrichtung als auch gute Aufnahme und Ableitung von Wasser ermöglicht und somit sowohl gute Handlingeigenschaften auf trockener Straße als auch gute Aquaplaningeigenschaften ermöglicht werden.

Die Aufgabe wird erfindungsgemäß durch die Ausbildung eines Fahrzeugluftreifens mit Laufstreifenprofil mit über den Umfang des Fahrzeugluftreifens erstreckten Profilbändern - wie zum Beispiel Profilrippen oder Profilblockreihen -, die in axialer Richtung A des Fahrzeugluftreifens durch über den Umfang des Fahrzeugluftreifens erstreckte Umfangsrillen begrenzt sind, mit wenigstens einer über den Umfang des Fahrzeugluftreifens erstreckten Profilrippe gemäß den Merkmalen von Anspruch 1 gelöst, bei dem in der Profilrippe mehrere über den Umfang des Fahrzeugluftreifens verteilt angeordnete und voneinander beabstandete Paare von axial nebeneinander angeordneten, in Umfangsrichtung U ausgerichteten Rillen ausgebildet sind, die sich in entgegengesetzter Umfangserstreckungsrichtung jeweils ausgehend von einem Rillenbeginn unter stetiger Zunahme ihrer Rillentiefe T über ein Umfangssegment des Fahrzeugluftreifens mit einem gemeinsamen Umfangserstreckungsabschnitt erstrecken und enden, und bei dem die beiden Rillen jeweils an ihrem Erstreckungsende in eine quer- oder schrägverlaufende Querrille münden.

Durch diese Ausbildung wird ermöglicht, dass bei Beibehaltung einer über den gesamten Umfang erstreckten Umfangsrippe, welche zusätzlich mit über den Umfang verteilten Segmente mit Umfangsrillenabschnitten versehen ist, eine hohe Quersteifigkeit des Profils gewährleistet werden kann. Die beiden benachbarten Umfangsrillenabschnitte ermöglichen auch in breiten Profilrippen eine ausreichende Aufnahme von Wasser und eine Ableitung in die in sie einmündenden Querrillen. Die Profilrippe ermöglicht durch die segmentartig verteilten Umfangsabschnitte mit axial benachbarten Umfangsrillen, die jeweils in ableitende Querrillen einmünden, ein großes Volumen zur Aufnahme von Wasser im Bereich der Profilrippe mit Hilfe der Querrillen und der Umfangsrillen bei Beibehaltung einer hohen Umfangs- und Quersteifigkeit. Darüber hinaus ermöglichen die Umfangsrillen und die Querrillen eine Vielzahl von Griffkanten, welche den Griff auf nasser und trockener Fahrbahn zusätzlich begünstigen. Die gegenläufige Tiefenveränderung der benachbarten Umfangsrillen bewirkt, bei zusätzlicher Begünstigung der Steifigkeit, einen verstärkten Aufbau von Druck zur Wasserableitung, wodurch das Wasser in beiden Drehrichtungen des Fahrzeugluftreifens trotz hoher Umfangs- und Quersteifigkeit in großer Menge aufgenommen und sicher abgeleitet werden kann. Somit wird eine hohe Dichte von Ableitungskanälen bei einer hohen Steifigkeit der Profilrippe in Umfangs- und in Querrichtung ermöglicht. Darüber hinaus wird hierdurch der Einsatz von besonders breiten Profilrippen in den für Handlingeigenschaften besonders kritischen Zonen bei Sicherstellung guter Wasseraufnahme und Wasserableitung ermöglicht.

Besonders vorteilhaft ist die Ausbildung eines Fahrzeugluftreifens gemäß den Merkmalen von Anspruch 2, wobei die Querrille jeweils ausgehend von der Rille nur zu einer in axialer Richtung A des Reifens gerichteten Seite in der Rippe ausgebildet ist. Die hierfurch bedingte Asymmetrie der Rippe ermöglicht eine gezielt optimierte Ausbildung zur Erzielung guter Handlingeigenschaften.

Besonders vorteilhaft ist die Ausbildung eines Fahrzeugluftreifens gemäß den Merkmalen von Anspruch 3, wobei die Querrille jeweils ausgehend von der Rille auf einer in axialer Richtung A des Reifens gerichteten Seite der Rille über den gesamten auf dieser Seite der Rille ausgebildeten axialen Erstreckungsbereich der Profilrippe innerhalb der Bodenaufstandsbreite T_{A} des Reifens erstreckt ausgebildet ist. Hierdurch kann die Ausbreitung von Schall beim Durchlaufen des Reifenlatsches reduziert und die Geräuschbildung des Reifens minimiert werden.

Besonders vorteilhaft ist die Ausbildung eines Fahrzeugluftreifens gemäß den Merkmalen von Anspruch 4, wobei die Querrillen des Paares von Rillen jeweils ausgehend von ihrer zugeordneten Rille in zueinander entgegengesetzter axialer Richtung A erstreckt ausgebildet sind. Hierdurch kann die Wasseraufnahme und Wasserableitung und somit Aquaplaningeigenschaften auf einem sehr hohen Niveau ermöglicht werden.

Besonders vorteilhaft ist die Ausbildung eines Fahrzeugluftreifens gemäß den Merkmalen von Anspruch 5, wobei die beiden Querrillen in ihrem gesamten Erstreckungsverlauf ausgehend von ihrer zugeordneten Rille mit jeweils von beiden Rillen wegweisender axialer Erstreckungsrichtung ausgebildet sind. Hierdurch kann in einfacher Weise eine hohe Wasseraufnahme und Wasserableitung bei weiter verbesserter Umfangssteifigkeit ermöglicht werden.

Besonders vorteilhaft zu einer optimalen Entwässerung ist die Ausbildung eines Fahrzeugluftreifens gemäß den Merkmalen von Anspruch 6, wobei wenigstens eine der beiden Querrillen in eine die Profilrippe in axialer Richtung A begrenzende Umfangsrille mündet.

Besonders vorteilhaft ist die Ausbildung eines Fahrzeugluftreifens gemäß den Merkmalen von Anspruch 7, wobei die beiden Rillen sich ausgehend von dem Rillenbeginn über ein gemeinsames Umfangssegment des Fahrzeugluftreifens erstrecken und dort enden. Hierdurch können bei hoher Umfangs- und Quersteifigkeit sehr kurze Evakuierungs- und Verdrängungswege zur Ableitung von Wasser aus der Reifenoberfläche umgesetzt werden.

Besonders vorteilhaft ist die Ausbildung eines Fahrzeugluftreifens gemäß den Merkmalen von Anspruch 8, wobei die Rillentiefe längs ihrer Erstreckung in Umfangsrichtung kontinuierlich zunimmt. Die hierdurch in den benachbarten Rillen gebildeten, in entgegengesetzten Richtungen verlaufenden Rampen bewirken eine erhöhte Umfangs- und Quersteifigkeit des Profilbandes im Erstreckungsbereich der Rillen trotz der Rillen und eine Stabilisierung des zwischen den Rillen ausgebildeten Gummimaterials.

Besonders vorteilhaft ist die Ausbildung eines Fahrzeugluftreifens gemäß den Merkmalen von Anspruch 9, wobei die Rillentiefe längs ihrer Erstreckung in Umfangsrichtung U ausgehend vom Rillenbeginn in einem ersten Erstreckungsabschnitt progressiv steigend und in einem zweiten Erstreckungsabschnitt bis zum Rillenende degressiv steigend zunimmt. Hierdurch kann die Fließbewegung des Wassers harmonisiert werden.

Besonders vorteilhaft ist die Ausbildung eines Fahrzeugluftreifens gemäß den Merkmalen von Anspruch 10, wobei die Rippe als Schulterprofilband des Laufstreifens in der für den Einsatz am Fahrzeug als die Außenschulter OU ausgebildeten Reifenschulter ausgebildet ist und wobei das Laufstreifenprofil insbesondere als asymmetrisches Laufstreifenprofil ausgebildet ist. Durch diese Ausbildung ist eine gezielte Optimierung des Laufstreifenprofils hinsichtlich besonders guter Handling- und Geräuschreduktion möglich. Trotz guter Wasseraufnahmefähigkeit, Wasserableitefähigkeit und guter Handlingeigenschaften kann die Abstrahlung von Schall aus dem Laufstreifenprofil vom Fahrzeug nach außen minimiert werden.

Besonders vorteilhaft ist die Ausbildung eines Fahrzeugluftreifens gemäß den Merkmalen von Anspruch 11, wobei die Rippe eine zwischen den Reifenschultern ausgebildete Rippe ist und wobei das Laufstreifenprofil insbesondere als symmetrisches Laufstreifenprofil ausgebildet ist. Hierdurch kann eine gute Umfangs- und Quersteifigkeit bei gleichzeitig guter Entwässerung aus der Profilmitte umgesetzt werden.

Die Erfindung wird im Folgenden an Hand der in den Figuren 1 bis 6 dargestellten Ausführungsbeispiele näher erläutert. Hierin zeigen
- Fig.1: eine Draufsicht auf einen Abschnitt eines asymmetrischen Laufslreifenprofiles eines PKW-Fahrzeugluftreifens,
- Fig.2: das Laufstreifenprofil von Fig.1 in Schnittdarstellung gemäß Schnitt II-II,
- Fig.3: das Laufstreifenprofil von Fig.1 in Schnittdarstellung gemäß Schnitt III-III,
- Fig.4: das Laufstreifenprofil von Fig.1 in Schnittdarstellung gemäß Schnitt IV-IV,
- Fig.5: das Laufstreifenprofil von Fig.1 in Schnittdarstellung gemäß Schnitt V-V,
- Fig.6: eine Draufsicht auf einen Abschnitt eines symmetrischen Laufstreifenprofiles eines PKW-Fahrzeugluftreifens.

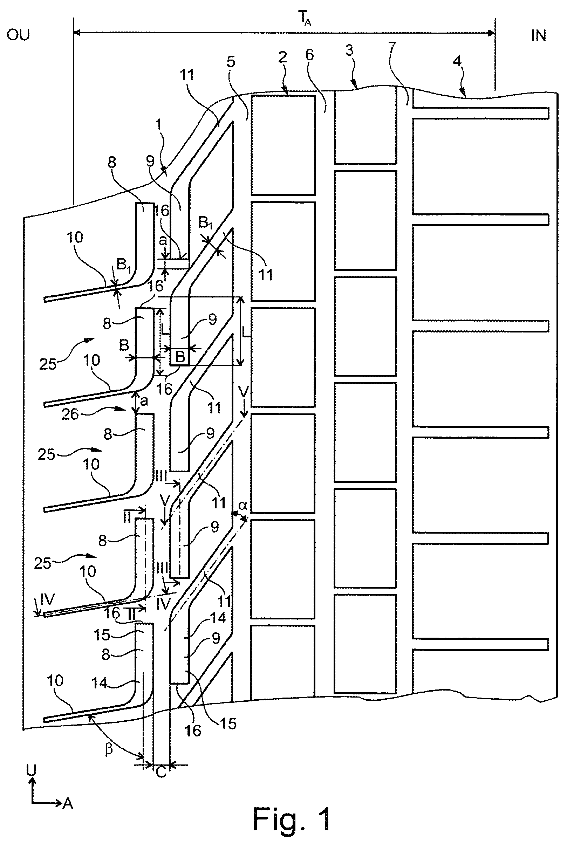

Die Figuren 1 bis 5 zeigen ein Laufstreifenprofil eines Fahrzeugluftreifens für PKW-Fahrzeuge mit einer seitengebundenen, asymmetrischen Laufstreifenprofilierung mit einer in axialer Richtung A des Fahrzeugluftreifens für den Einsatz am Fahrzeug zur Fahrzeugaußenseite OU hin und mit einer zur Fahrzeuginnenseite IN ausgebildeten Seite. Das Laufstreifenprofil ist an seiner zur Fahrzeugaußenseite OU hin weisend ausgebildeten Reifenschulter mit einer über den Umfang des Fahrzeuglufreifens erstreckt ausgebildeten Profilrippe 1 ausgebildet, welche sich in Umfangsrichtung U des Fahrzeugluftreifens ausgerichtet über den gesamten Umfang des Fahrzeuglufreifens erstreckt. In axialer Richtung A zu der zur Fahrzeuginnenseite IN hin ausgebildeten Schulter ist benachbart zur Profilrippe 1 eine Profilblockreihe 2 bekannter Art ausgebildet, welche sich über den gesamten Umfang des Fahrzeugluftreifens erstreckt und in Umfangsrichtung U ausgerichtet ist. Die Profilblockreihe 2 ist in bekannter Weise aus in Umfangsrichtung U hintereinander angeordneten und jeweils durch Querrillen voneinander getrennten Profilblockelementen ausgebildet. In axialer Richtung A zu der zur Fahrzeuginnenseite IN hin ausgebildeten Schulter ist benachbart zur Profilblockreihe 2 eine Profilblockreihe 3 bekannter Art ausgebildet, welche sich über den gesamten Umfang des Fahrzeugluftreifens erstreckt und in Umfangsrichtung U ausgerichtet ist. Die Profilblockreihe 3 ist in bekannter Weise aus in Umfangsrichtung U hintereinander angeordneten und jeweils durch Querrillen voneinander getrennten Profilblockelementen ausgebildet. An der zur Fahrzeuginnenseite IN hin ausgebildeten Reifenschulter ist in axialer Richtung A benachbart zur Profilblockreihe 3 eine Profilblockreihe 4 bekannter Art ausgebildet, welche sich über den gesamten Umfang des Fahrzeugluftreifens erstreckt und in Umfangsrichtung U ausgerichtet ist. Die Profilblockreihe 4 ist in bekannter Weise aus in Umfangsrichtung U hintereinander angeordneten und jeweils durch Querrillen voneinander getrennten Profilblockelementen ausgebildet.

Die Profilrippe 1 und die Profilblockreihe 2 sind in bekannter Weise in axialer Richtung A durch eine in Umfangsrichtung U ausgerichtete und über den gesamten Umfang des Fahrzeugluftreifens erstreckte Umfangsrille 5 voneinander beabstandet. Die Profilblockreihe 2 und die Profilblockreihe 3 sind in axialer Richtung A in bekannter Weise durch eine in Umfangsrichtung U ausgerichtete und über den gesamten Umfang des Fahrzeugluftreifens erstreckte Umfangsrille 6 voneinander beabstandet. Die Profilblockreihe 3 und die Profilblockreihe 4 sind in axialer Richtung A durch eine über den gesamten Umfang des Fahrzeugluftreifens erstreckte und in Umfangsrichtung U ausgerichtete Umfangsrille 7 voneinander beabstandet.

Die Querrillen der Profilblockreihe 4 erstrecken sich ausgehend von einer Position außerhalb der Bodenabstandsbreite T_{A}. durch die Profilblockreihe 4 bis in die Umfangsrille 7. Die Querrillen der Profilblockreihe 3 erstrecken sich in axialer Richtung A ausgehend von der Umfangsrille 7 bis in die Umfangsrille 6. Die Querrillen der Profilblockreihe 2 erstrecken sich in axialer Richtung A ausgehend von der Umfangsrille 6 bis in die Umfangsrille 5.

Die Profilrippe 1 ist in ihrer in axialer Richtung A ausgehend von der Umfangsrille 5 zur Reifenaußenseite OU hin im axialen Erstreckungsbereich der Bodenaufstandsbreite T_{A} gemessenen Breite größer ausgebildet als die Breite der Profilblockreihen 2, 3 und 4.

In der Profilrippe 1 sind über den Umfang des Fahrzeugluftreifens verteilt Umfangssegmenten 25 ausgebildet, in denen jeweils ein Paar von in axialer Richtung A mit Abstand c voneinander beabstandeten Rillen 8 und 9 ausgebildet sind, die sich in Umfangsrichtung U des Fahrzeugluftreifens erstrecken. Die Rillen 8 und 9 erstrecken sich dabei jeweils ausgehend von einem Rillenanfang 16 im Umfangssegment 25 in Umfangsrichtung U mit einer in Umfangsrichtung gemessenen Längenerstreckung L und enden in einer Schrägrille 10 bzw. 11. Dabei endet dabei eine Rille 8 jeweils in einer Schrägrille 10. Eine Rille 9 endet jeweils in einer Schrägrille 11. Die Rillen 8 und 9 sind dabei längs ihrer Längenerstreckung L mit einer in axialer Richtung A gemessenen Breite B ausgebildet, wobei die Breite B jeweils in der die Rippe in radialer Richtung R des Fahrzeugluftreifens nach außen hin begrenzenden, die Straßenkontaktoberfläche bildenden, radial äußeren Oberfläche 12 der Profilrippe 1 gemessen wird.

Im dargestellten Ausführungsbeispiel sind die Rillen 8 und 9 über ihre gesamte in radialer Richtung R gemessene radiale Erstreckung ausgehend von dem die jeweilige Rille 8 bzw. 9 nach radial innen begrenzenden Rillengrund 13 bis zur radial äußeren Oberfläche 12 der Profilrippe 1 längs ihrer gesamten Längenerstreckung der Länge L mit der Breite B ausgebildet.

Ausgehend von ihrem Rillenanfang 16 bis zur Schrägrille 10 ist die Erstreckungsrichtung der Rille 8 in entgegengesetzter Umfangsrichtung zu der vom Rillenanfang 16 der Rille 9 zur Schrägrille 11 hin gerichteten Erstreckungsrichtung der Rille 9 orientiert.

Die Schrägrille 10 erstreckt sich von der Rille 8 geradlinig ausgehend mit einer axialen Richtungskomponente A in einer von den beiden Rillen 8 und 9 wegweisenden Richtung zur Reifenaußenseite OU hin bis in eine Position außerhalb der Bodenaufstandsbreite T_{A} und schließt dabei in Orientierungsrichtung der Rille 8 ausgehend vom Beginn 16 der Rille 8 zur Schrägrille 10 hin gesehen (d.h. in Figur 1 von oben nach unten gesehen), einen Winkel β zur Umfangsrichtung U ein. Die Schrägrille 11 erstreckt sich ausgehend von der Rille 9 geradlinig bis in die Umfangsrille 5 und schließt dabei in der Orientierungsrichtung der Rille 9 ausgehend vom Rillenbeginn 16 der Rille 9 zur Schrägrille 11 hin gesehen (d.h. in Figur 1 von unten nach oben gesehen) einen Windel α zur Umfangsrichtung U des Fahrzeugluftreifens ein.

Der Winkel α ist zwischen 40° und 90° gewählt. Im dargestellten Ausführungsbeispiel ist α = 45° gewählt. Der Winkel β ist zwischen 40° und 90° gewählt. Im dargestellten Ausführungsbeispiel ist β = 80° gewählt. Die gewählten Winkel β und α bedeuten auch, dass im dargestellten Ausführungsbeispiel in axialer Richtung A ausgehend von der Reifenaußenseite OU zur Reifeninnenseite IN innerhalb der Bodenaufstandsbreite T_{A.} die Schrägrillen 10 und 11 längs ihrer axialen Erstreckung eine Neigung mit gleicher Neigungsrichtung aufweisen.

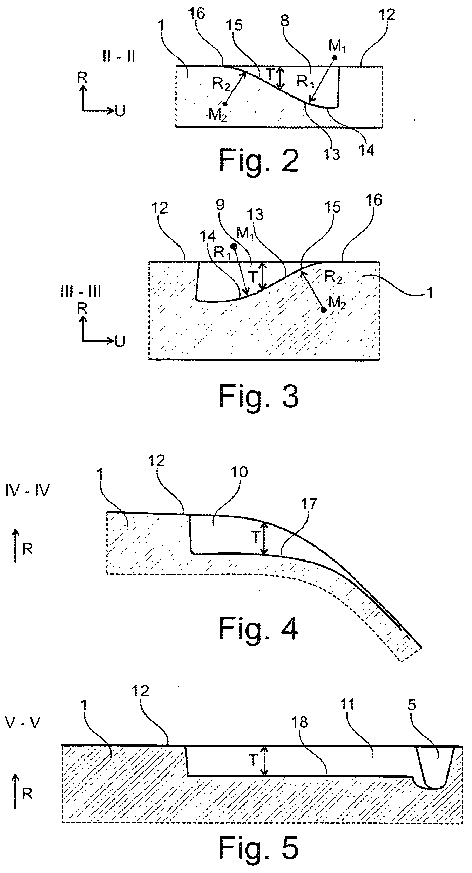

Wie in Figur 2 zu erkennen ist, ist die Rille 8, ausgehend vom Beginn 16 der Rille 8 über ihre Erstreckungslänge L in Umfangsrichtung U bis zur Einmündung in die Schrägrille 10 zunächst in einem ersten Erstreckungsbereich 15 mit einer progressiv zunehmenden Rillentiefe T und in einem sich an den ersten Erstreckungsbereich 15 anschließenden zweiten Erstreckungsbereich 14 mit einer degressiv zunehmenden Rillentiefe T ausgebildet ist. Der zweite Erstreckungsbereich 14 erstreckt sich bis zur Einmündung der Rille 8 in die Schrägrille 10.

Die Rillentiefe T der Rille 9 ist - wie dargestellt in Figur 3 - ausgehend vom Beginn 16 der Rille 9 über ihre Erstreckungslänge L in Umfangsrichtung U bis zur Einmündung in die Schrägrille 11 der Rille 9 längs ihrer gesamten Erstreckung zunächst in einem ersten Erstreckungsbereich 15 mit progressiv zunehmender Rillentiefe T und in einem sich an den ersten Erstreckungsbereich 15 anschließenden zweiten Erstreckungsbereich 14 mit degressiv zunehmender Rillentiefe T ausgebildet. Der zweite Erstreckungsbereich 14 erstreckt sich bis zur Einmündung der Rille 9 in die Schrägrille 11.

Aus diese Weise ist ausgehend vom Rillenbeginn 16, in welcher die Rillentiefe T = 0mm beträgt, bis zur Einmündung in die jeweilige Schrägrille 10 bzw. 11, die jeweilige Rille 8 bzw. 9 über ihren gesamten Erstreckungsbereich mit stetig zunehmender Rillentiefe T ausgebildet und erreicht ihr Maximum T_{MAX} in der Einmündung in die jeweilige Schrägrille 10 bzw. 11. Die Schrägrille 10 ist im Erstreckungsbereich der Einmündung der Rille 8 ebenfalls mit der maximalen Rillentiefe T_{MAX} der Rille 8 ausgebildet. Die Schrägrille 11 ist im Erstreckungsbereich der Einmündung der Rille 9 ebenfalls mit der maximalen Rillentiefe T_{MAX} der Rille 9 ausgebildet. Die Rillentiefe T ist dabei jeweils die radiale Erstreckung der jeweiligen Rille 8 bzw. 9 bzw. 10 bzw. 11 ausgehend von der radial äußeren Oberfläche 12 bis zum jeweiligen die Rille 8 bzw. 9 bzw. 10 bzw. 11 nach radial innen begrenzenden Rillengrund 13 bzw. 17 bzw. 18.

In den Querschnittsebenen senkrecht zur Reifenachse ist der Rillengrundes 13 der Rille 8 ausgehend vom Beginn 16 der Rille 8 mit einer im ersten Erstreckungsbereich 15 um einen auf der zur Reifeninnenseite des Rillengrundes 13 angeordneten Krümmungsmittelpunkt M₂ mit Krümmungsradius R₂ gekrümmten und im zweiten Erstreckungsbereich 14 um einen auf der in radialer Richtung zur Reifenaußenseite vom Rillengrund 13 angeordneten Krümmungsmittelpunkt M₁ mit Krümmungsradius R₁ gekrümmten Konturlinie ausgebildet, wobei der Übergang zwischen der Krümmung im ersten Erstreckungsbereich 15 und der Krümmung im zweiten Erstreckungsbereich 14 tangential ausgebildet ist

In den Querschnittsebenen senkrecht zur Reifenachse ist der Rillengrundes 13 der Rille 9 ausgehend vom Beginn 16 der Rille 9 mit einer im ersten Erstreckungsbereich 15 um einen auf der zur Reifeninnenseite des Rillengrundes 13 angeordneten Krümmungsmittelpunkt M₂ mit Krümmungsradius R₂ gekrümmten und im zweiten Erstreckungsbereich 14 um einen auf der in radialer Richtung zur Reifenaußenseite vom Rillengrund 13 angeordneten Krümmungsmittelpunkt M₁ mit Krümmungsradius R₁ gekrümmten Konturlinie ausgebildet, wobei der Übergang zwischen der Krümmung im ersten Erstreckungsbereich 15 und der Krümmung im zweiten Erstreckungsbereich 14 tangential ausgebildet ist.

In Umfangsrichtung U des Fahrzeugluftreifens ist der in Umfangsrichtung U gemessene Abstand zwischen dem Beginn 16 einer Rille 8 und der nächstliegenden Schrägrille 10 mit a bezeichnet, ebenso ist der in Umfangsrichtung U gemessene Abstand des Rillenbeginns 16 einer Rille 9 zur nächstliegenden Schrägrille 11 mit a bezeichnet. Somit ergibt sich jeweils zwischen einer ersten Rille 8 und einer in die nächste Rille 8 mündenden angrenzender Schrägrille 10 ein rillenfreier Umfangserstreckungsbereich 26. Ebenso ergibt sich jeweils zwischen einer Rille 9 und einer in die nächste Rille 9 einmündende Schrägrille 11 ein rillenfreier Umfangserstreckungsbereich 26.

In jedem Umfangssegment 25 sind die beiden Rillen 8 und 9 des in dem Umfangsegment 25 ausgebildeten Paares von Rillen 8 und 9 jeweils mit ihrer von ihrem Rillenbeginn 16 bis zur Einmündung in die jeweilige Schrägrille 10 bzw. 11 gemessenen Umfangserstreckung in einem gemeinsamen, gleichen Umfangserstreckungsabschnitt ausgebildet.

Die Erstreckungslängen L der Rillen 8 und 9 sind in Abhängigkeit von den gewählten Pitchlängen des Laufstreifenprofiles mit 15mm ≤ L ≤ 50mm ausgebildet. Im dargestellten Ausführungsbeispiel sind die Erstreckungslängen L mit 15mm ≤ L ≤ 20mm - beispielsweise mit L=18mm - ausgebildet. Die Rillen 8 und 9 sind dabei mit ihrer Umfangserstreckung wenigstens zur Hälfte ihrer jeweiligen Erstreckungslänge L im gemeinsamen, gleichen Umfangserstreckungsabschnitt ausgebildet, sodass sie mit einer Umfangsüberlappungslänge von wenigstens der Hälfte ihrer Erstreckungslänge L ausgebildet sind. Die Überlappungslänge ist im dargestellten Ausführungsbeispiel mit wenigstens 10mm ausgebildet.

In einem nicht dargestellten Ausführungsbeispiel sind die Rillen 8 und 9 mit vollständiger Umfangsüberlappung ausgebildet, dass heißt, dass sie mit gleicher Erstreckungslänge L mit gleicher Umfangspositionierung im Fahrzeugluftreifen und mit identischem Umfangserstreckungsbereich ausgebildet sind.

Die Ausbildung des Abstand a der Rillen 8 bzw. 9 ist jeweils abhängig vom gewählten Winkel α bzw. β der jeweiligen Schrägrillen 10 und 11. Der Abstand a ist mit 5mm≤a≤20mm gewählt.

Der in axialer Richtung A gemessene Abstand c zwischen den Rillen 8 und 9 ist mit 3mm ≤ c ≤ 10mm - beispielsweise mit c = 5mm - ausgebildet.

Die Breite B₁ der Schrägrillen 10 und 11 ist mit 1mm≤ B₁≤6mm ausgebildet. Die Schrägrille 10 ist dabei bspw. mit einer Breite von B₁=2mm, die Schrägrille 11 mit einer Breite B₁=3mm ausgebildet.

Die Rillen 8 und 9 sind mit einer Breite B mit 2mm≤B≤15mm ausgebildet. Die Breite B ist beispielsweise mit B=5mm gewählt.

Die Rillentiefe T der Rillen 8 und 9 ist in ihrem maximalem Wert T_{MAX} im Bereich der Einmündung in die jeweilige Schrägrille 10 bzw. 11 mit 4mm≤ T_{MAX} ≤ 9mm ausgebildet.

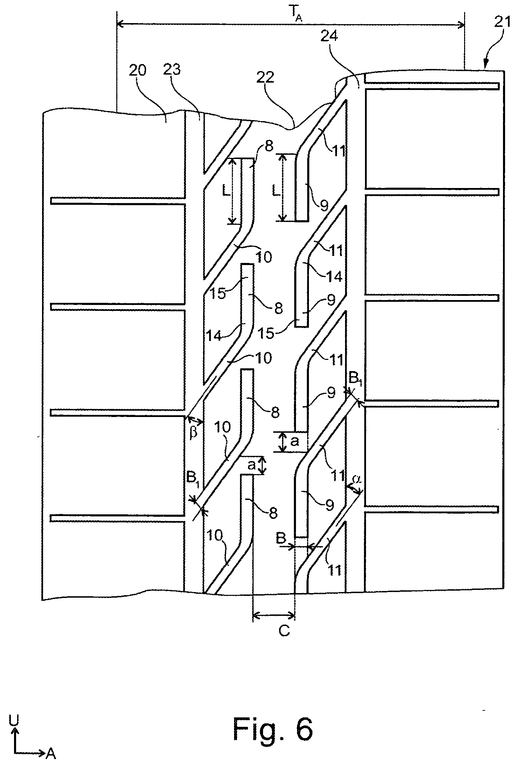

Figur 6 zeigt ein alternatives Ausführungsbeispiel eines Laufstreifenprofils mit symmetrischem Profil, bei dem in den beiden Reifenschultern jeweils eine in Umfangsrichtung U des Reifens erstreckte und über den gesamten Umfang ausgerichtete Profilblockreihe 20 bzw. 21 ausgebildet ist. Die Profilblockreihen 20 und 21 sind jeweils aus in Umfangsrichtung U hintereinander angeordneten und durch Querrillen voneinander beabstandeten Profilblockelementen ausgebildet. In axialer Richtung A zwischen den beiden Schulterprofilblockreihen 20 und 21 ist eine Profilrippe 22 ausgebildet, die sich über den gesamten Umfang des Fahrzeugluftreifens erstreckt und in Umfangsrichtung U ausgerichtet ist. Die Profilrippe 22 ist von der Schulterprofilblockreihe 20 durch eine Umfangsrille 23 und von der Schulterprofilblockreihe 21 durch eine Umfangsrille 24 in axialer Richtung A beabstandet. Die Umfangsrillen 23 und 24 erstrecken sich über den gesamten Umfang des Fahrzeugluftreifens und sind in Umfangsrichtung U ausgerichtet. Die Profilrippe 22 ist analog zur Profilrippe 1 von Figur 1 mit über den Umfang verteilten Umfangssegmenten 25 ausgebildet, in welchen jeweils ein Paar von Rillen 8 und 9 mit Schrägrillen 10 und 11 ausgebildet sind, die den Paaren von Rillen 8 und 9 und Schrägrillen 10 und 11 der Profilrippe 1 von Figur 1 entsprechend ausgebildet sind. Die Schrägrillen 10 erstrecken sich dabei jeweils ausgehend von einer Rille 8 bis in die Umfangsrille 23, die Schrägrillen 11 erstrecken sich jeweils ausgehend von einer Rille 9 bis in die Umfangsrille 24. Der Winkel β der Schrägrillen 10 ist in dem in Figur 6 dargestellten Ausführungsbeispiel mit 45° ausgebildet. Ebenso ist der Winkel α der

Schrägrille 11 mit β=α=45° dargestellt. Die sonstige Ausbildung der Rillen 8 und 9 mit Tiefenverlauf und Längserstreckung entspricht den in den Figuren 1 bis 5 dargestellten und/oder erläuterten Ausbildungen.

### Bezugszeichenliste

### (Teil der Beschreibung)

- 1: Profilrippe
- 2: Profilblockreihe
- 3: Profilblockreihe
- 4: Profilblockreihe
- 5: Umfangsrille
- 6: Umfangsrille
- 7: Umfangsrille
- 8: Rille
- 9: Rille
- 10: Schrägrille
- 11: Schrägrille
- 12: Radial äußere Oberfläche
- 13: Rillengrund
- 14: Zweiter Erstreckungsbereich
- 15: Erster Erstreckungsbereich
- 16: Rillenbeginn (Anfang der Rille)
- 17: Rillengrund
- 18: Rillengrund
- 19:
- 20: Profilblockreihe
- 21: Profilblockreihe
- 22: Profilrippe
- 23: Umfangsrille
- 24: Umfangsrille
- 25: Umfangssegment
- 26: Umfangssegment

## Patentansprüche

1. Fahrzeugluftreifen mit Laufstreifenprofil mit über den Umfang des Fahrzeugluftreifens erstreckten Profilbändern (1,2,3,4,20,21,22) - wie zum Beispiel Profilrippen oder Profilblockreihen-, die in axialer Richtung A des Fahrzeugluftreifens durch über den Umfang des Fahrzeugluftreifens erstreckte Umfangsrillen (5,6,7,23,24) begrenzt sind, mit wenigstens einer über den Umfang des Fahrzeugluftreifens erstreckten Profilrippe (1,22), **in welcher Rillen** (8, 9) **ausgebildet sind, die in der Profilrippe (1,22) enden,**
**dadurch gekennzeichnet,**
**dass** in der Profilrippe (1,22) mehrere über den Umfang des Fahrzeugluftreifens verteilt angeordnete und voneinander beabstandete Paare von axial nebeneinander angeordneten, in Umfangsrichtung U ausgerichteten Rillen (8,9) ausgebildet sind, die sich in entgegengesetzter Umfangserstreckungsrichtung jeweils ausgehend von einem Rillenbeginn (16) unter stetiger Zunahme ihrer Rillentiefe T über ein Umfangssegment des Fahrzeugluftreifens mit einem gemeinsamen Umfangserstreckungsabschnitt erstrecken und enden, und
**dass** die beiden Rillen (8,9) jeweils an ihrem Erstreckungsende in eine quer- oder schrägverlaufende Querrille (10,11) münden.

2. Fahrzeugluftreifen gemäß den Merkmalen von Anspruch 1,
wobei die Querrille (10,11) jeweils ausgehend von der Rille (8,9) nur zu einer in axialer Richtung A des Reifens gerichteten Seite in der Profilrippe (1,22) ausgebildet ist.

3. Fahrzeugluftreifen gemäß den Merkmalen von Anspruch 1 oder 2,
wobei die Querrille (10,11) auf einer in axialer Richtung A des Reifens gerichteten Seite der Rille (8,9) **jeweils ausgehend von der Rille (8,9)** über den gesamten auf dieser Seite der Rille **innerhalb der Bodenaufstandsbreite T_{A} des Reifens** ausgebildeten axialen Erstreckungsbereich der Profilrippe (1,22) erstreckt ausgebildet ist.

4. Fahrzeugluftreifen gemäß den Merkmalen von Anspruch 2 oder 3,
wobei die Querrillen (10,11) des Paares von Rillen (8,9) jeweils ausgehend von ihrer zugeordneten Rille (8,9) in zueinander entgegengesetzter axialer Richtung A erstreckt ausgebildet sind.

5. Fahrzeugluftreifen gemäß den Merkmalen von Anspruch 4,
wobei die beiden Querrillen (10,11) in ihrem gesamten Erstreckungsverlauf ausgehend von ihrer zugeordneten Rille (8,9) mit jeweils von beiden Rillen (8,9) wegweisender axialer Erstreckungsrichtung ausgebildet sind.

6. Fahrzeugluftreifen gemäß den Merkmalen von einem oder mehreren der vorangegangenen Ansprüche,
wobei wenigstens eine (11) der beiden Querrillen (10,11) in eine die Profilrippe (1,22) in axialer Richtung A begrenzende Umfangsrille (5,24) mündet.

7. Fahrzeugluftreifen gemäß den Merkmalen von einem oder mehreren der vorangegangenen Ansprüche,
wobei die beiden Rillen (8,9) sich ausgehend von dem Rillenbeginn (16) über ein gemeinsames Umfangssegment des Fahrzeugluftreifens erstrecken und dort enden.

8. Fahrzeugluftreifen gemäß den Merkmalen von einem oder mehreren der vorangegangenen Ansprüche,
wobei die Rillentiefe T der Rillen (8,9) längs ihrer Erstreckung in Umfangsrichtung kontinuierlich zunimmt.

9. Fahrzeugluftreifen gemäß den Merkmalen von Anspruch 8,
wobei die Rillentiefe T längs ihrer Erstreckung in Umfangsrichtung U ausgehend vom Rillenbeginn (16) in einem ersten Erstreckungsabschnitt (15) progressiv steigend und in einem zweiten Erstreckungsabschnitt (14) bis zum Rillenende degressiv steigend zunimmt.

10. Fahrzeugluftreifen gemäß den Merkmalen von einem oder mehreren der vorangegangenen Ansprüche,
wobei die Rippe (1) als Schulterprofilband des Laufstreifens in der für den Einsatz am Fahrzeug als die Außenschulter OU ausgebildeten Reifenschulter ausgebildet ist und
wobei das Laufstreifenprofil insbesondere als asymmetrisches Laufstreifenprofil ausgebildet ist.

11. Fahrzeugluftreifen gemäß den Merkmalen von einem oder mehreren **der Ansprüche 1 bis 9,**
wobei die Rippe (22) eine zwischen den Reifenschultern ausgebildete Rippe ist und wobei das Laufstreifenprofil insbesondere als symmetrisches Laufstreifenprofil ausgebildet ist.

## Claims

1. Pneumatic vehicle tyre with a tread profile with profile strips (1, 2, 3, 4, 20, 21, 22) made to extend over the circumference of the pneumatic vehicle tyre - such as for example profile ribs or rows of profile blocks - , which are delimited in the axial direction A of the pneumatic vehicle tyre by circumferential grooves (5, 6, 7, 23, 24) made to extend over the circumference of the pneumatic vehicle tyre, with at least one profile rib (1, 22), which is made to extend over the circumference of the pneumatic vehicle tyre and formed in which are grooves (8, 9), which end in the profile rib (1, 22),
**characterized**
**in that** in the profile rib (1, 22) there are formed a number of pairs, arranged distributed over the circumference of the pneumatic vehicle tyre and spaced apart from one another, of grooves (8, 9) that are arranged axially next to one another, are aligned in the circumferential direction U and are respectively made to extend and end in opposite directions of circumferential extent, starting from a groove beginning (16) and steadily increasing in their groove depth T over a circumferential segment of the pneumatic vehicle tyre with a common portion of circumferential extent, and
**in that** the two grooves (8, 9) respectively open out at the end of their extent into a transversely or obliquely running transverse groove (10, 11).

2. Pneumatic vehicle tyre according to the features of Claim 1,
wherein, respectively starting from the groove (8, 9), the transverse groove (10, 11) is formed in the profile rib (1, 22) only to one side that is directed in the axial direction A of the tyre.

3. Pneumatic vehicle tyre according to the features of Claim 1 or 2,
wherein, respectively starting from the groove (8, 9), the transverse groove (10, 11) is formed on a side of the groove (8, 9) that is directed in the axial direction A of the tyre and is made to extend over the entire axial region of extent of the profile rib (1, 22) that is formed on this side of the groove, within the ground contact width T_{A} of the tyre.

4. Pneumatic vehicle tyre according to the features of Claim 2 or 3,
Wherein, respectively starting from their assigned groove (8, 9), the transverse grooves (10, 11) of the pair of grooves (8, 9) are formed so as to extend in opposite axial directions A in relation to one another.

5. Pneumatic vehicle tyre according to the features of Claim 4,
wherein, starting from their assigned groove (8, 9), the two transverse grooves (10, 11) are formed in the entire course of their extent with an axial direction of extent respectively pointing away from the two grooves (8, 9).

6. Pneumatic vehicle tyre according to the features of one or more of the preceding claims,
wherein at least one (11) of the two transverse grooves (10, 11) opens out into a circumferential groove (5, 24) delimiting the profile rib (1, 22) in the axial direction A.

7. Pneumatic vehicle tyre according to the features of one or more of the preceding claims,
wherein, starting from the groove beginning (16), the two grooves (8, 9) extend over a common circumferential segment of the pneumatic vehicle tyre and end there.

8. Pneumatic vehicle tyre according to the features of one or more of the preceding claims,
wherein the groove depth T of the grooves (8 9) increases continuously along its extent in the circumferential direction.

9. Pneumatic vehicle tyre according to the features of Claim 8,
wherein, starting from the groove beginning (16), the groove depth T increases along its extent in the circumferential direction U, becoming progressively greater in a first portion of extent (15) and becoming degressively greater in a second portion of extent (14) up to the groove end.

10. Pneumatic vehicle tyre according to the features of one or more of the preceding claims,
wherein the rib (1) is formed as a shoulder profile band of the tread in the tyre shoulder formed as the outer shoulder OU for use on the vehicle and wherein the tread profile is formed in particular as an asymmetrical tread profile.

11. Pneumatic vehicle tyre according to the features of one or more of Claims 1 to 9,
wherein the rib (22) is a rib formed between the tyre shoulders and
wherein the tread profile is formed in particular as a symmetrical tread profile.

## Revendications

1. Bandage pneumatique pour roue de véhicule présentant un profil de bande de roulement doté de bandes profilées (1, 2, 3, 4, 20, 21, 22), par exemple des nervures profilées ou des rangées de blocs profilés, qui s'étendent sur la périphérie du bandage pneumatique pour roue de véhicule, qui sont délimitées dans la direction axiale A du bandage pneumatique pour roue de véhicule par des rainures périphériques (5, 6, 7, 23, 24) qui s'étendent sur la périphérie du bandage pneumatique pour roue de véhicule, et qui présentent au moins une nervure profilée (1, 22) qui s'étend sur la périphérie du bandage pneumatique pour roue de véhicule et dans laquelle sont formées des rainures (8, 9) qui se terminent dans les nervures profilées (1, 22),
**caractérisé en ce que**
plusieurs paires de rainures (8, 9) disposées les unes derrière les autres dans la direction axiale et alignées dans la direction périphérique U, réparties à la périphérie du bandage pneumatique de véhicule et situées à distance les unes des autres, sont formées dans la bande profilée (1, 22) sur la périphérie du bandage pneumatique pour roue de véhicule et s'étendent et se terminent dans des directions opposées d'extension périphérique, partant d'un début (16) de rainure, avec augmentation constante de la profondeur T de rainure sur un segment périphérique de bandage pneumatique pour roue de véhicule avec une section commune d'extension périphérique, et
**en ce que** les deux rainures (8, 9) débouchent chacune à l'extrémité de leur extension dans une rainure transversale (10, 11) qui s'étend transversalement ou obliquement.

2. Bandage pneumatique pour roue de véhicule selon les caractéristiques de la revendication 1,
dans lequel partant de la rainure (8, 9), chaque rainure transversale (10, 11) est formée uniquement vers un côté de la rainure profilée (1, 22) orienté dans la direction axiale A du bandage de roue.

3. Bandage pneumatique pour roue de véhicule selon les caractéristiques des revendications 1 ou 2,
dans lequel partant de la rainure (8, 9) et sur un côté de la rainure (8, 9) orienté dans la direction axiale A du bandage de roue, la rainure transversale (10, 11) s'étend sur toute la partie d'extension axiale de la nervure profilée (1, 22) formée sur ce côté de la rainure à l'intérieur de la largeur T_{A} d'appui au sol du bandage de roue.

4. Bandage pneumatique pour roue de véhicule selon les caractéristiques des revendications 2 ou 3,
dans lequel partant de la rainure (8, 9) qui leur est associée, les rainures transversales (10, 11) de la paire de rainures (8, 9) s'étendent dans des directions axiales A mutuellement opposées.

5. Bandage pneumatique pour roue de véhicule selon les caractéristiques de la revendication 4,
dans lequel partant de la rainure (8, 9) qui leur est associée, les deux rainures transversales (10, 11) sont formées sur toute leur extension dans une direction d'extension axiale qui s'éloigne des deux rainures (8, 9).

6. Bandage pneumatique pour roue de véhicule selon les caractéristiques d'une ou plusieurs des revendications précédentes,
dans lequel au moins l'une (11) des deux rainures transversales (10, 11) débouche dans une rainure périphérique (5, 24) qui délimite la nervure profilée (1, 22) dans la direction axiale A.

7. Bandage pneumatique pour roue de véhicule selon les caractéristiques d'une ou plusieurs des revendications précédentes,
dans lequel les deux rainures (8, 9) s'étendent et se terminent sur un segment périphérique commun du bandage pneumatique de roue de véhicule en partant du début (16) de la rainure.

8. Bandage pneumatique pour roue de véhicule selon les caractéristiques d'une ou plusieurs des revendications précédentes,
dans lequel la profondeur T des rainures (8, 9) augmente de manière continue dans la direction périphérique le long de leur extension.

9. Bandage pneumatique pour roue de véhicule selon les caractéristiques de la revendication 8,
dans lequel dans une première section (15) de leur extension, la profondeur T des rainures augmente avec une pente croissante dans la direction périphérique U en partant du début (16) de la rainure et dans une deuxième section (14) de leur extension, augmente avec une pente décroissante jusqu'à l'extrémité de la rainure.

10. Bandage pneumatique pour roue de véhicule selon les caractéristiques d'une ou plusieurs des revendications précédentes,
dans lequel la nervure (1) est configurée comme bande profilée d'épaulement de la bande de roulement dans l'épaulement du bandage de roue formé comme épaulement OU situé à l'extérieur lorsque le bandage de roue est placé sur le véhicule et
dans lequel le profil de bande de roulement est configuré en particulier comme profil asymétrique de bande de roulement.

11. Bandage pneumatique pour roue de véhicule selon les caractéristiques d'une ou plusieurs des revendications 1 à 9,
dans lequel la nervure (22) est une nervure formée entre les épaulements du bandage de roue et dans lequel le profil de bande de roulement est configuré en particulier comme profil symétrique de bande de roulement.
